# EUROPÄISCHE PATENTSCHRIFT

(11) **EP 1 436 062 B1**
(45) Veröffentlichungstag und Bekanntmachung des Hinweises auf die Patenterteilung: **14.09.2005**
(21) Anmeldenummer: 01983550.3
(22) Anmeldetag: 16.10.2001
(51) Int. Cl.: B01D 29/21

(54) **FILTERELEMENT MIT EINEM ELEKTRISCH LEITFFÄHIGEN STÜTZGEWEBE**
FILTER ELEMENT COMPRISING AN ELECTRICALLY CONDUCTIVE SUPPORTING WEAVE
ELEMENT FILTRE POURVU D'UN TISSU DE SUPPORT ELECTRO-CONDUCTEUR

(43) Veröffentlichungstag der Anmeldung: 14.07.2004
(73) Patentinhaber: ARGO-HYTOS GmbH, 76703 Kraichtal-Menzingen (DE)
(72) Erfinder: BREUSCH, Norbert, 74889 Sinsheim, Elsenz (DE)
(74) Vertreter: Karrais, Martin
(86) Internationale Anmeldenummer: PCT/EP2001/011922
(87) Internationale Veröffentlichungsnummer: WO 2003/033100

(56) Entgegenhaltungen:
- WO-A-01/37969
- DE-U- 20 013 839
- US-A- 4 089 783

## Beschreibung

Die Erfindung betrifft ein Filterelement für Flüssigkeiten, insbesondere für Hydraulikflüssigkeiten, mit einem Filtermaterial und mit einer das Filtermaterial bezogen auf die Durchströmrichtung des Filterelementes zumindest reinseitig abstützenden gitterförmigen Stützstruktur, wobei die Stützstruktur aus einem Kunststoffmaterial gefertigte und elektrisch leitfähige Elemente aufweist.

Filterelemente sind beispielsweise aus der WO 01/37969 A1 sowie der US-A-4,089,783 bekannt. Sie kommen insbesondere bei Hydrauliksystemen zum Einsatz, wie sie beispielsweise bei selbstfahrenden Maschinen, zum Beispiel Baumaschinen oder Landmaschinen, oder auch bei Werkzeug- und Bearbeitungsmaschinen, zum Beispiel Spritzgußrnaschinen, verwendet werden. Hier-bei müssen die Hydrauliksysteme sehr hohen Anforderungen an die Sauberkeit der Hydraulikflüssigkeit genügen, um über lange Betriebszeiten störungsfrei und mit geringem Verschleiß ihre Funktion erfüllen zu können. Das Filterelement wird von der Hydraulikflüssigkeit durchströmt, wobei sich zwischen der Rohseite und der Reinseite des Flterelementes eine Druckdifferenz einstellt. Um dieser Druckdifferenz standhalten zu können, wird das Filtermaterial von der Stützstruktur abgestützt. Je nach Betriebsweise des Hydrauliksystemes unterliegt die Stützstruktur einer starken Druckwechselbetastung, die eine Beschädigung der Stützstruktur zur Folge haben kann.

Üblicherweise kommt als Stützstruktur ein verzinktes Metallsieb oder ein Edelstahlgewebe zum Einsatz. Hierbei besteht allerdings bei Volumenstromwechsel die Gefahr von Drahtbrüchen. Dies kann zu einer Verunreinigung der Hydraulikflüssigkeit führen. Es wurde deshalb bereits vorgeschlagen, das Metallsieb durch ein Kunststoffgewebe zu ersetzen. Es hat sich allerdings gezeigt, daß der Einsatz eines Kunststoffgewebes oder auch eines extrudierten Kunststoffnetzgitters zu statischen Aufladungen führen kann, die eine Beeinträchtigung des Hydrauliksystemes, insbesondere eine Schädigung der Hydraulikflüssigkeit, zur Folge haben können.

Aus der Gebrauchsmusterschrift DE 200 13 839 U1 ist ein Filterwerkstoff bekannt, der eine Stützlage umfaßt, auf die ein Faservlies aufgenagelt ist. Die Stützlage ist als Gewebe oder Gelege ausgebildet mit quer zueinander angeordneten Kett- und Schußfäden, Ein Teil der Fäden ist aus einem elektrisch leitfähigen Material, vorzugsweise aus Metall, gefertigt und bildet ein Flächenraster, während die restlichen Fäden der Stützlage ebenso wie das Faservlies aus einem Kunststoffmaterial gefertigt sind.

Aufgabe der vorliegenden Erfindung ist es, ein Filterelement der eingangs genannten Art derart auszugestalten, daß es eine hohe mechanische Stabilität aufweist, wobei statische Aufladungen vermieden werden.

Diese Aufgabe wird bei einem Filterelement der gattungsgemäßen Art erfindungsgemäß dadurch gelöst, daß die Stützstruktur ein Stützgewebe ausbildet, das sowohl Metall- als auch Kuriststoffäden aufweist, und daß das Filtermaterial und das Stützgewebe flächig aneinander anliegen und sternförmig gefaltet sind, wobei die Metallfäden parallel zu den Falten des Stützgewebes verlaufen.

Es hat sich gezeigt, daß durch den Einsatz von aus einem Kunststoffmaterial gefertigten und elektrisch leitfähigen Elementen für die das Filtermaterial abstützende Stützstruktur einerseits eine hohe mechanische Biegewechsel-Stabilität erzielt werden kann, andererseits statische Aufladungen zuverlässig vermieden werden. Die mechanische Biegewechsel-Stabilität wird hierbei insbesondere durch den Einsatz des Kuriststoffmateriales in Form der Kunststofffäden gewährleistet, das der Stützstruktur eine hohe mechanische Biegewechselfestigkeit verleiht. Durch den Einsatz eines elektrisch leitfähigen Materiales in Form der Metallfäden wird sichergestellt, daß elektrische Ladungen abgeführt werden können und folglich statische Aufladungen vermieden werden.

Das Kunststoffmaterial und der metallische Werkstoff werden erfindungsgemäß miteinander verschränkt. Dies verleiht der Stützstruktur eine besonders hohe mechanische Belastbarkeit.

Das Filtermaterial und das flächig anliegende Stützgewebe sind sternförmig zu einem Filterbalg gefaltet, Hierbei ist gemäß der Erfindung vorgesehen, daß die Metallfäden parallel zu den Falten des Stützgewebes verlaufen. Die Metallfäden unterliegen somit bei der Herstellung und während des Einsatzes des Filterbalges keiner beachtlichen Biegebeanspruchung. Dadurch läßt sich die Standzeit des Filterelementes erheblich steigern. Die Kunststoffäden verlaufen schräg oder senkrecht zu den Falten des Stützgewebes. Da das Kunststoffmaterial jedoch eine höhere Biegewechselfestigkeit aufweist als der metallische Werkstoff, führt eine derartige Ausrichtung der Kunststoffäden nicht zu einer relevanten Verminderung der mechanischen Stabilität des Stützgewebes.

Von Vorteil ist es, wenn die Kettfäden des Stützgewebes aus Kunststoff gefertigt sind. Beim Weben der Schußfäden kann das leitfähige metallische Material zum Einsatz kommen, wobei ergänzend zusätzlich Kunststoffäden herangezogen werden können.

Zur Verbesserung der An- und Abströmverhältnisse des Filteretementes hat es sich als günstig erwiesen, wenn die Kett- und Schußfäden des Stützgewebes unterschiedliche Durchmesser aufweisen. Hierbei ist es von besonderem Vorteil, wenn der Durchmesser der Kettfäden größer ist als der Durchmesser der Schußfäden.

Vorzugsweise weisen die Kettfäden einen Durchmesser von ca. 0,2 mm bis etwa 0,3 mm auf. Insbesondere ein Durchmesser von ca. 0,25 mm bis ungefähr 0,26 mm hat sich für die Kettfäden als besonders günstig erwiesen.

Die Schußfäden weisen bevorzugt einen Durchmesser von ca. 0,1 mm bis etwa 0,2 mm auf, von Vorteil ist insbesondere ein Durchmesser von ungefähr 0,12 mm bis etwa 0,18 mm.

Um einerseits das Filtermaterial zuverlässig abstützen zu können und andererseits den sich beim Durchströmen des Filterelementes einstellenden Druckabfall möglichst gering zu halten, hat sich für das Stützgewebe eine Maschenweite von etwa 0,6 mm bis etwa 1 mm als besonders günstig erwiesen.

Als elektrisch leitfähiges Material kann ein Eisenmaterial, beispielsweise verzinktes Eisenmaterial, zum Einsatz kommen. Als besonders vorteilhaft hat es sich erwiesen, wenn das elektrisch leitfähige Material ein rostfreier Stahl ist.

Als Kunststoffmaterial kann beispielsweise ein Polyestermaterial zum Einsatz kommen.

Insbesondere für den Einsatz eines Filterelementes als Feinfilter ist es von Vorteil, wenn das Filtermaterial mehrlagig ausgestaltet ist. So kann vorgesehen sein, daß das Filtermaterial eine Feinfilterschicht sowie eine die Feinfilterschicht zumindest reinseitig überdeckende Schutzschicht aufweist. Als Feinfilterschicht kann beispielsweise ein Vlies oder Zellulose-Papier zum Einsatz kommen. Die die Feinfilterschicht reinseitig abdeckende Schutzschicht kann ebenfalls in Form eines Vlieses ausgestaltet sein. Rohseitig können eine oder mehrere Vorfilterschichten die Feinfilterschicht abdecken. Auch die Vorfilterschichten können in Form von Vliesen und/oder Zellulose-Papieren ausgebildet sein.

Zur Vermeidung einer mechanischen Beeinträchtigung des Filtermaterials und - bei Ausgestaltung als Filterbalg - zur Offenhaltung der Falten ist es von Vorteil, wenn das Filtermaterial rohseitig von einem siebartigen Schutzgewebe überdeckt ist. Hierbei kann vorgesehen sein, daß als siebartiges Schutzgewebe ebenfalls die voranstehend erläuterte gitterförmige Stützstruktur, insbesondere das Stützgewebe, zum Einsatz kommt.

Die nachfolgende Beschreibung einer bevorzugten Ausführungsform der Erfindung dient im Zusammenhang mit der Zeichnung der näheren Erläuterung. Es zeigen:
- Figur 1:: eine schaubildliche Darstellung eines Filterelementes und
- Figur 2:: eine vergrößerte Darstellung des Detail A aus Figur 1.

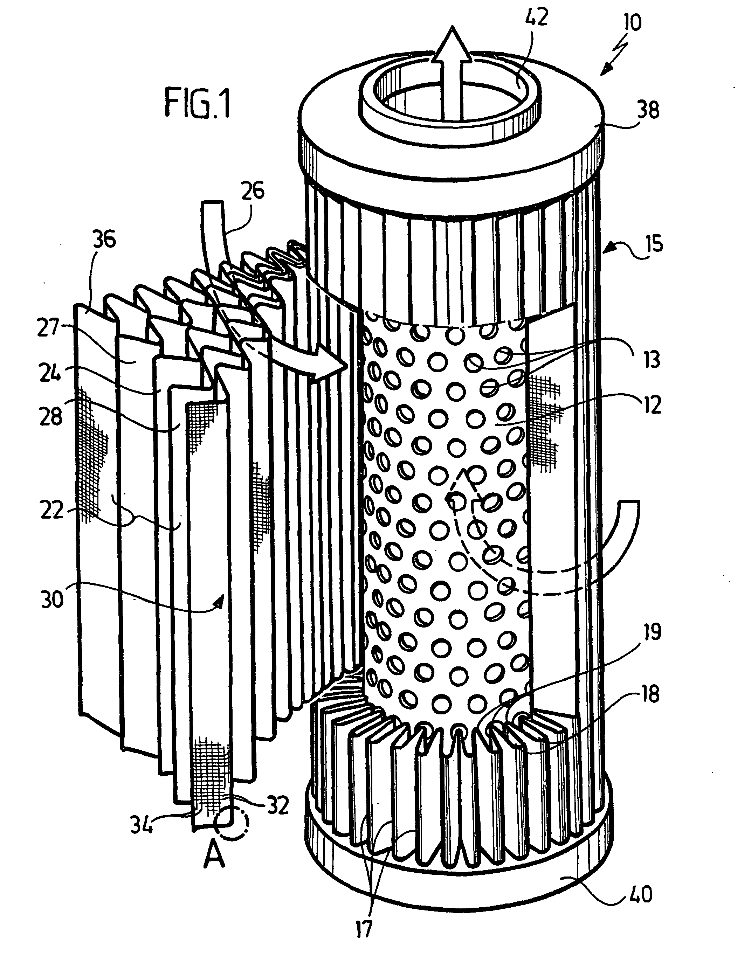

In Figur 1 ist schematisch ein insgesamt mit dem Bezugszeichen 10 belegtes Filterelement dargestellt. Es umfaßt ein zylinderförmiges Stützrohr 12, das in radialer Richtung von einer Vielzahl von Durchflußöffnungen 13 durchsetzt ist. In Umfangsrichtung ist das Stützrohr 12 von einem mehrlagigen Filterbalg 15 umgeben, der in Figur 1 zur Verdeutlichung teilweise nach Art einer Explosionszeichnung dargestellt ist. Der Filterbalg 15 ist durch parallel zur Längsachse des Stützrohres 12 verlaufende Falten 17 sternförmig so gefaltet, daß längs seines Umfangs radial außenliegende Faltenspitzen 18 und radial innenliegende Faltengründe 19 abwechselnd aufeinander folgen.

Der Filterbalg 15 weist ein dreilagiges Filtermaterial 22 auf mit einer Feinfilterschicht in Form eines Vlieses 24, das in Durchströmrichtung 26, in der dargestellten Ausführungsform also in radialer Richtung von außen nach innen, rohseitig von einem Vorfiltervlies 27 und reinseitig von einem Schutzvlies 28 abgedeckt ist. Die Vliese können beispielsweise aus einem Kunststoff- oder Glasfasermaterial gefertigt sein.

In Durchströmrichtung 26 stützt sich das Filtermaterial 22 reinseitig an einem Stützgewebe 30 ab, welches flächig am Schutzvlies 28 des Fil-Stützgewebe 30 wiederum stützt sich in Durchströmrichtung 26 im Bereich der Faltengründe 19 am Stützrohr 12 ab.

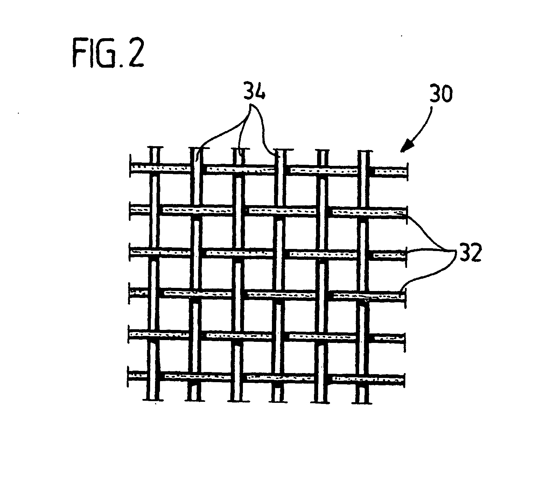

Der Aufbau des Stützgewebes 30 ist in Figur 2 vergrößert dargestellt. Es ist sieb- oder gitterförmig ausgestaltet und wird aus Kunststoffmaterial gefertigten Kettfäden 32 und aus Metall gefertigen Schußfäden 34 gebildet. Als Kunststoffmaterial kommt hierbei vorzugsweise Polyester zum Einsatz, während die Schußfäden 34 aus einem rostfreien metallischen Werkstoff, beispielsweise aus Edelstahl, gefertigt sind. Das Stützgewebe 30 ist derart ausgerichtet, daß die metallischen Schußfäden 34 parallel zu den Falten 17 verlaufen, während die aus Kunststoff gefertigten Kettfäden 32 senkrecht zu den Falten 17 ausgerichtet sind. Die metallischen Schußfäden 34 unterliegen folglich beim Falten des Filterbalges 15 und bei der Filtration der Flüssigkeit praktisch keiner Biegebeanspruchung. Mit ihrem Einsatz wird jedoch sichergestellt, daß aufgrund von Ladungs-trennungsvorgängen innerhalb des Filtermaterials 22 auftretende elektrische Ladungen abgeführt werden können. Dies ist insbesondere dann von Bedeutung, wenn das Stützrohr 12 aus Kunststoff gefertigt ist.

Rohseitig ist das Filtermaterial 22 von einem siebförmigen Schutzgewebe 36 abgedeckt. Hierbei kann beispielsweise ein Metallsieb zum Einsatz kommen. Es kann allerdings auch vorgesehen sein, daß das Schutzgewebe 36 identisch wie das Stützgewebe 30 ausgebildet ist und ebenfalls Kunststoff- und Metallfäden umfaßt.

Stirnseitig wird der Filterbalg 15 von einer oberen und einer unteren Endkappe 38 bzw. 40 abgedeckt, die mit dem Filterbalg 15 verklebt sind. Die untere Endkappe 40 bildet hierbei einen strömungsdichten Abschluß des Filterelementes 10 aus, während die obere Endkappe 38 eine zentrale Auslaßöffnung 42 aufweist.

Die zu filtrierende Flüssigkeit wird der Außenseite des Filterelementes 10 zugeführt, so daß es den Filterbalg 15 radial von außen nach innen durchströmen und über die Durchflußöffnungen 13 in das Innere des Stützrohres 12 gelangen kann. Anschließend strömt das gefilterte Fluid in Längsrichtung des Stützrohres 12 zur Auslaßöffnung 42 und über diese aus dem Filterelement 10 wieder heraus. Um den sich am Filterbalg 15 ausbildenden Druckabfall der durchströmenden Flüssigkeit möglichst gering zu halten, hat es sich als vorteilhaft erwiesen, wenn die Kett- und Schußfäden 32 bzw. 34 unterschiedliche Materialstärken aufweisen. Hierbei hat sich für die aus Kunststoff gefertigten Kettfäden ein Durchmesser von etwa 0,25 mm bis ungefähr 0,26 mm als besonders vorteilhaft erwiesen, während für die metallischen Schußfäden 34 vorzugsweise ein Durchmesser von ungefähr 0,15 mm bis 0,17 mm vorgesehen ist. Die Maschenweite des Stützgewebes 13 beträgt etwa 0,6 mm bis ungefähr 1,0 mm.

## Patentansprüche

1. Filterelement für Flüssigkeiten, insbesondere für Hydraulikflüsslgkeiten, mit einem Filtermaterial (22) und mit einer das Filtermaterial (22) bezogen auf die Durchströmrichtung (26) des Filteretementes (10), zumindest reinseitig abstützenden gitterförmigen Stützstruktur (30), wobei die Stützstruktur (30) aus einem Kunststoffmaterial gefertigte und elektrisch leitfähige Elemente (32, 34) aufweist, **dadurch gekennzeichnet, daß** die Stützstruktur ein Stützgewebe (30) ausbildet, das sowohl Metall- als auch Kunststoffäden aufweist, und daß das Filtermaterial (22) und das Stützgewebe (30) flächig aneinander anliegen und sternförmig gefaltet sind, wobei die Metallfäden (34) parallel zu den Falten (17) des Stützgewebes (30) verlaufen.

2. Filterelement nach Anspruch 1, **dadurch gekennzeichnet, daß** die Kettfäden (32) des Stützgewebes (30) aus Kunststoff gefertigt sind.

3. Filterelement nach Anspruch 1 oder 2, **dadurch gekennzeichnet, daß** die Schußfäden (34) des Stützgewebes (30) aus Metall gefertigt sind.

4. Filterelement nach einem der Ansprüche 1 bis 3, **dadurch gekennzeichnet, daß** die Kett- und Schußfäden (32, 34) des Stützgewebes (30) unterschiedliche Durchmesser aufweisen.

5. Fliterelement nach Anspruch 4, **dadurch gekennzeichnet, daß** der Durchmesser der Kettfäden (32) größer ist als der Durchmesser der Schußfäden (34).

6. Filterelement nach Anspruch 4 oder 5, **dadurch gekennzeichnet, daß** die Kettfäden (32) einen Durchmesser von ca. 0,2 mm bis etwa 0,3 mm aufweisen.

7. Filterelement nach Anspruch 4, 5 oder 6, **dadurch gekennzeichnet, daß** die Schußfäden (34) einen Durchmesser von ca. 0,1 mm bis etwa 0,2 mm aufweisen.

8. Filterelement nach einem der voranstehenden Ansprüche, **dadurch gekennzeichnet, daß** das Stützgewebe (30) eine Maschenweite von ca. 0,6 mm bis etwa 1,0 mm aufweist.

9. Filterelement nach einem der voranstehenden Ansprüche, **dadurch gekennzeichnet, daß** das elektrisch leitfähige Material ein rostfreier Stahl ist.

10. Filterelement nach einem der voranstehenden Ansprüche, **dadurch gekennzeichnet, daß** das Kunststoffmaterial ein Polyestermaterial ist.

11. Filterelement nach einem der voranstehenden Ansprüche, **dadurch gekennzeichnet, daß** das Filtermaterial (22) eine Feinfilterschicht (24) sowie eine die Feinfilterschicht (24) zumindest reinseitig überdeckende Schutzschicht (28) und/oder eine die Feinfilterschicht (24) rohseitig überdekkende Vorfilterschicht (27) umfaßt.

12. Filterelement nach einem der voranstehenden Ansprüche, **dadurch gekennzeichnet, daß** das Filtermaterial (22) rohseitig von einem siebartigen Schutzgewebe (36) überdeckt ist.

## Claims

1. Filter element for fluids, in particular for hydraulic fluids, comprising a filter material (22), and a grid-like supporting structure (30) supporting the filter material (22) at least on its outflow side in relation to the flow direction (26) of the filter element (10), the supporting structure (30) having elements (32) made of a plastics material and electrically conductive elements (34), **characterized in that** the supporting structure forms a supporting fabric (30) comprising both metal threads and plastic threads, and **in that** the filter material (22) and the supporting fabric (30) lie surface-to-surface against one another and are folded in the shape of a star, with the metal threads (34) extending parallel to the pleats (17) of the supporting fabric (30).

2. Filter element in accordance with claim 1, **characterized in that** the warp threads (32) of the supporting fabric (30) are made of a plastics material.

3. Filter element in accordance with claim 1 or 2, **characterized in that** the weft threads (34) of the supporting fabric (30) are made of metal.

4. Filter element in accordance with any one of claims 1 to 3, **characterized in that** the warp and weft threads (32, 34) of the supporting fabric (30) have different diameters.

5. Filter element in accordance with claim 4, **characterized in that** the diameter of the warp threads (32) is larger than the diameter of the weft threads (34).

6. Filter element in accordance with claim 4 or 5, **characterized in that** the warp threads (32) have a diameter of from approximately 0.2 mm to approximately 0.3 mm.

7. Filter element in accordance with claim 4, 5 or 6, **characterized in that** the weft threads (34) have a diameter of from approximately 0.1 mm to approximately 0.2 mm.

8. Filter element in accordance with any one of the preceding claims, **characterized in that** the supporting fabric (30) has a mesh width of from approximately 0.6 mm to approximately 1.0 mm.

9. Filter element in accordance with any one of the preceding claims, **characterized in that** the electrically conductive material is a stainless steel.

10. Filter element in accordance with any one of the preceding claims, **characterized in that** the plastics material is a polyester material.

11. Filter element in accordance with any one of the preceding claims, **characterized in that** the filter material (22) comprises a fine filter layer (24), a protective layer (28) covering the fine filter layer (24) at least on its outflow side and/or a prefilter layer (27) covering the fine filter layer (24) on its inflow side.

12. Filter element in accordance with any one of the preceding claims, **characterized in that** the filter material (22) is covered on its inflow side by a screen-like protective fabric (36).

## Revendications

1. Élément de filtrage de fluides, en particulier de fluides hydrauliques, comportant un matériau de filtrage (22) et une structure de support (30) en forme de treillis supportant le matériau de filtrage (22) au moins du côté purifié par référence à la direction d'écoulement (26) à travers l'élément de filtrage (10), la structure de support (30) comportant des éléments (32, 34) électriquement conducteurs et fabriqués à partir d'une matière plastique, **caractérisé en ce que** la structure de support forme un tissu de support (30) qui comporte des fils métalliques et aussi des fils de matière plastique, et **en ce que** le matériau de filtrage (22) et le tissu de support (30) portent à plat l'un contre l'autre et sont pliés en étoile, les fils métalliques (34) s'étendant parallèlement aux plis (17) du tissu de support (30).

2. Élément de filtrage selon la revendication 1, **caractérisé en ce que** les fils de chaîne (32) du tissu de support (30) sont fabriqués à partir d'une matière plastique.

3. Élément de filtrage selon la revendication 1 ou 2, **caractérisé en ce que** les fils de trame (34) du tissu de support (30) sont fabriqués à partir d'un métal.

4. Élément de filtrage selon l'une des revendications 1 à 3, **caractérisé en ce que** les fils de chaîne et de trame (32, 34) du tissu de support (30) ont des diamètres différents.

5. Élément de filtrage selon la revendication 4, **caractérisé en ce que** le diamètre des fils de chaîne (32) est supérieur au diamètre des fils de trame (34).

6. Élément de filtrage selon la revendication 4 ou 5, **caractérisé en ce que** les fils de chaîne (32) ont un diamètre allant de 0,2 mm environ à 0,3 mm environ.

7. Élément de filtrage selon la revendication 4, 5 ou 6, **caractérisé en ce que** les fils de trame (34) ont un diamètre allant de 0,1 mm environ à 0,2 mm environ.

8. Élément de filtrage selon l'une des revendications précédentes, **caractérisé en ce que** le tissu de support (30) a une largeur de maille allant de 0,6 mm environ à 1,0 mm environ.

9. Élément de filtrage selon l'une des revendications précédentes, **caractérisé en ce que** le matériau électriquement conducteur est un acier inoxydable.

10. Élément de filtrage selon l'une des revendications précédentes, **caractérisé en ce que** la matière plastique est un polyester.

11. Élément de filtrage selon l'une des revendications précédentes, **caractérisé en ce que** le matériau de filtrage (22) comporte une couche de filtrage fin (24), ainsi qu'une couche de protection (28) recouvrant au moins du côté purifié la couche de filtrage fin (24) et/ou une couche de préfiltrage (27) recouvrant du côté non purifié la couche de filtrage fin (24).

12. Élément de filtrage selon l'une des revendications précédentes, **caractérisé en ce que** le matériau de filtrage (22) est recouvert du côté non purifié d'un tissu de protection (36) de type tamis.
